Europäisches Patentamt

European Patent Office

Office européen des brevets

(11) Veröffentlichungsnummer: **0 273 234**

**A2**

(12) **EUROPÄISCHE PATENTANMELDUNG**

(21) Anmeldenummer: **87117961.0**

(22) Anmeldetag: **04.12.87**

(51) Int. Cl.⁴: **H04L 25/48**

(30) Priorität: **20.12.86 DE 3643766**

(43) Veröffentlichungstag der Anmeldung:
**06.07.88 Patentblatt 88/27**

(84) Benannte Vertragsstaaten:
**AT BE CH DE ES FR GB IT LI NL SE**

(71) Anmelder: **Standard Elektrik Lorenz
Aktiengesellschaft
Lorenzstrasse 10
D-7000 Stuttgart 40(DE)**

(72) Erfinder: **Mitschke, Helmut
Obere Breitstrasse 8
D-7535 Königsbach-Stein 1(DE)**

(74) Vertreter: **Pohl, Heribert, Dipl.-Ing et al
Standard Elektrik Lorenz AG Patent- und
Lizenzwesen Postfach 30 09 29
D-7000 Stuttgart 30(DE)**

(54) **Datenbussystem für einen seriellen Datenbus.**

(57) Ein Bussystem für einen seriellen Datenbus enthält eine Datenbitquelle (1), an deren Datenausgang (2) eine einzige Busleitung (3) angeschlossen ist. Eine Datenbitserie besteht aus einem Startbit und einer bestimmten Anzahl Datenbits: das Startbit mit einer fallenden Flanke, die Datenbits mit einer ansteigenden Flanke. Den Bitwert eines Datenbits kennzeichnet die Länge des Impulses, mit dem das Datenbit beginnt. Ein Befehlsdecoder (4) tastet jedes Datenbit mit einem in einer bestimmten Zählerstellung (z8) erzeugten Abtastimpuls eines Taktimpulszählers (10) ab, der von den Impulsen einer Taktimpulsquelle (11) fortgeschaltet wird und von einem Flankendetektor (12) gesteuert wird. Die zu den Abtastzeitpunkten in einen Datenbitspeicher (18) eingeschriebenen Datenbitwerte werden am Ende der Datenbitserie in einen Befehlsspeicher (20) in dem gespeicherten Befehl entsprechende Steuersignale (S7) umgesetzt. Für die Taktimpulsfrequenz der Taktimpulsquelle (11) ist keine hohe Genauigkeit erforderlich.

Fig 1

## Datenbussystem für einen seriellen Datenbus

Die Erfindung bezieht sich auf ein Datenbussystem, der im Oberbegriff des Anspruches·1 angegebenen Art.

Aus der Druckschrift DIGID 2000 (Bestellnummer 6250-11-1E) der Firma Intermetall ist insbesondere aus den Seiten 8 bis 11 und 17 ein Datenbussystem für einen seriellen Datenbus bekannt, das drei Busleitungen enthält. Diese Busleitungen verbinden eine oder mehrere Datenbitquellen mit Datenempfängeranordnungen. Auf der einen Busleitung werden die Datenbits für den zu übertragenden Befehl, auf der zweiten Busleitung die Taktsignale zur Abtastung der Datenbits in den Datenempfangsanordnungen und auf der dritten Busleitung werden Steuersignale an die Datenempfangsanordnungen übertragen. Im nicht aktiven Zustand weisen alle drei Busleitungen einen bestimmten Spannungspegel auf. Auf der Datenleitung des seriellen Datenbusses werden eine vorbestimmte Anzahl Datenbits für einen Befehl übertragen, von denen eine bestimmte Anzahl Datenbits Adressenbits sind.

Insbesondere bei Geräten der Unterhaltungselektronik tritt oft ein Engpaß für die Verwendung einer größeren Anzahl von Steuerleitungen zu den einzelnen Prozessoren der Schaltung dieser Geräte auf. Außerdem sind gerade die Takt-und Steuerleitungen eines derartigen Datenbusses störanfällig, so daß für sie besondere Abschirmmaßnahmen notwendig werden. Schließlich müssen in einem derartigen Bussystem Prozessoren verwendet werden, an die die übertragenen Takt-und Steuersignale angepaßt sind.

Der Erfindung liegt die Aufgabe zugrunde, für die Verwendung insbesondere in Geräten der Unterhaltungselektronik ein Datenbussystem anzugeben, bei dem keine zusätzlichen Takt-und Steuersignale übertragen werden müssen und das besonders geeignet ist. Diese Aufgabe wird nach der Erfindung durch die im kennzeichnenden Teil des Anspruches 1 angegebenen Merkmale gelöst.

Der erfindungsgemäße Aufbau eines Datenbits aus einem Zyklus von Taktbits erlaubt es, die Datenbits ohne jegliche zusätzliche Takt-oder Steuerinformationen auf einer einzigen Busleitung an die Befehlsdecoder der einzelnen Empfangsbausteine zu übertragen. Die Empfangsbausteine erzeugen ihren eigenen Arbeitstakt, dessen Impulsfrequenz in weiten Grenzen von der Frequenz der Taktbits eines Taktbitzyklus abweichen kann. Infolgedessen ist es nicht erforderlich, in den Empfangsbausteinen besondere, frequenzstabilisierte Impulsgeneratoren zu verwenden. Vielfach steht ein Impulsgenerator zur Verfügung, der beispielsweise von der Zeilenfrequenz synchronisiert wird. Die Befehlsdecoder in den Empfangsbausteinen müssen somit lediglich an die Struktur der übertragenen Datenbits, nicht jedoch an übertragene Takt-und Steuersignale eines Bussystemes angepaßt sein.

Die Unteransprüche kennzeichnen vorteilhafte Ausgestaltungen und Weiterbildungen der Erfindung. Die Verwendung eines oder mehrere Kontrollbits als Datenbits hinter dem Startbit erhöht in vorteilhafter Weise die Störsicherheit. Störimpulse auf der Datenbusleitung können den Befehlsdecoder in den Decodierbetriebszustand setzen können. Durch die Verwendung von Datenbits als Adressenbits können in vorteilhafter Weise gezielte Empfangsbausteine zum Empfang des übertragenen Befehles aufgerufen werden.

Außerdem wird in den Unteransprüchen eine besonders vorteilhafte Ausgestaltung eines Befehlsdecoders nach der Erfindung für einen Empfangsbaustein angegeben. Ein derartiger Befehlsdecoder ist weitgehend unabhängig von der Datenbitquelle und kann in hohem Maße an die Erfordernisse des Empfängerbausteins angepaßt werden.

Die Erfindung wird nachfolgend anhand vorteilhafter Ausführungsbeispiele näher erläutert. In der zugehörigen Zeichnung zeigen

Fig. 1 ein Blockschaltbild eines Bussystemes mit einem seriellen Datenbus,

Fig. 2 Zeitdiagramme a) bis m) zum Funktionsablauf eines in Fig. 1 dargestellten Bussystemes,

Fig. 3 Zeitdiagramme a) bis d) zum Aufbau der Datenbits in einer Datenbitserie und zu deren Abtastung.

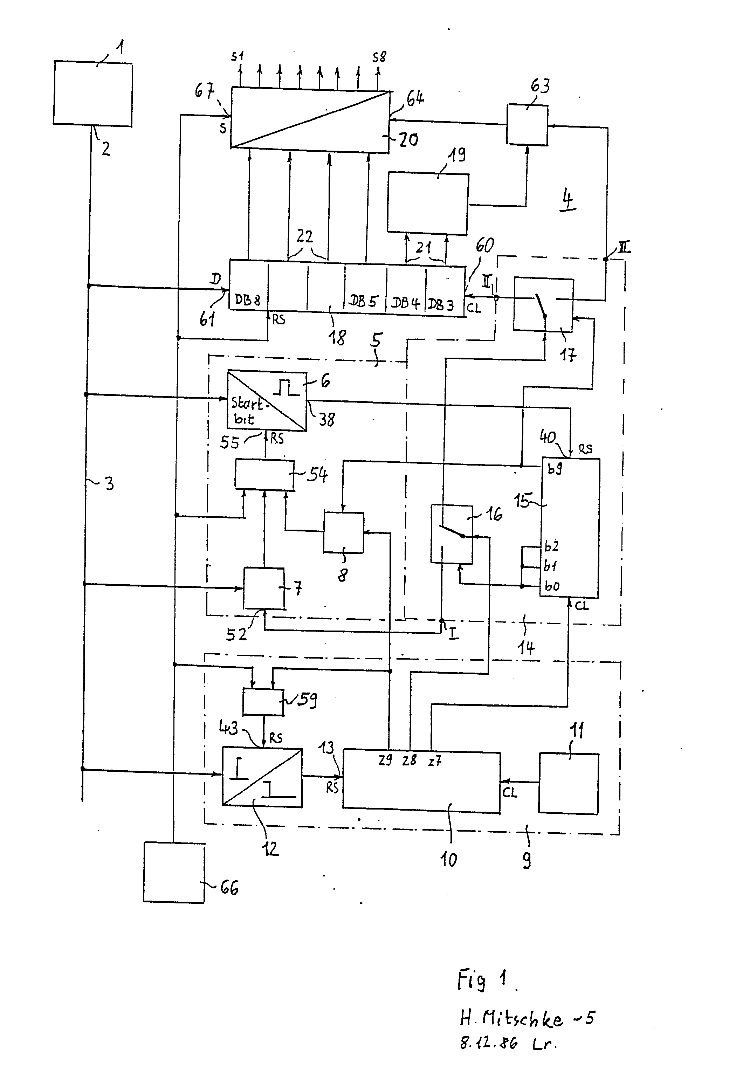

Das in Fig. 1 in einem Blockschaltbild dargestellte Bussystem besteht aus einer Datenbitquelle 1, an deren Datenausgang 2 die einzige Busleitung 3 des Datenbussystemes angeschlossen ist, und aus einem an diese Busleitung angeschlossenen Befehlsdecoder 4. Der Befehlsdecoder enthält einen an die Busleitung 3 angeschlossenen Startbitdecoder 5 mit einem rücksetzbaren Flankendetektor 6 und zwei Torschaltungen 7 und 8. Ferner enthält er eine Abtastsignalerzeugeranordnung 9 mit einem Taktimpulszähler 10, der von den Impulsen einer Taktimpulsquelle 11 schrittweise fortgeschaltet und von einem an die Busleitung 3 angeschlossenen weiteren Impulsflankendetektor 12 an seinem Rückstelleingang 13 gesteuert wird. Außerdem enthält der Befehlsdecoder 4 einen Abtastsignalwähler 14, der im dargestellten Ausführungsbeispiel von einem Bitzähler 15 und von diesem Bitzähler gesteuerten elektronischen Schaltern 16 und 17 gebildet ist, und eine Datenbitspeicheranordnung 18, an deren Datenausgänge 21 und 22 ein Adressendecoder 19 und ein Befehlsspeicher 20 angeschlossen sind.

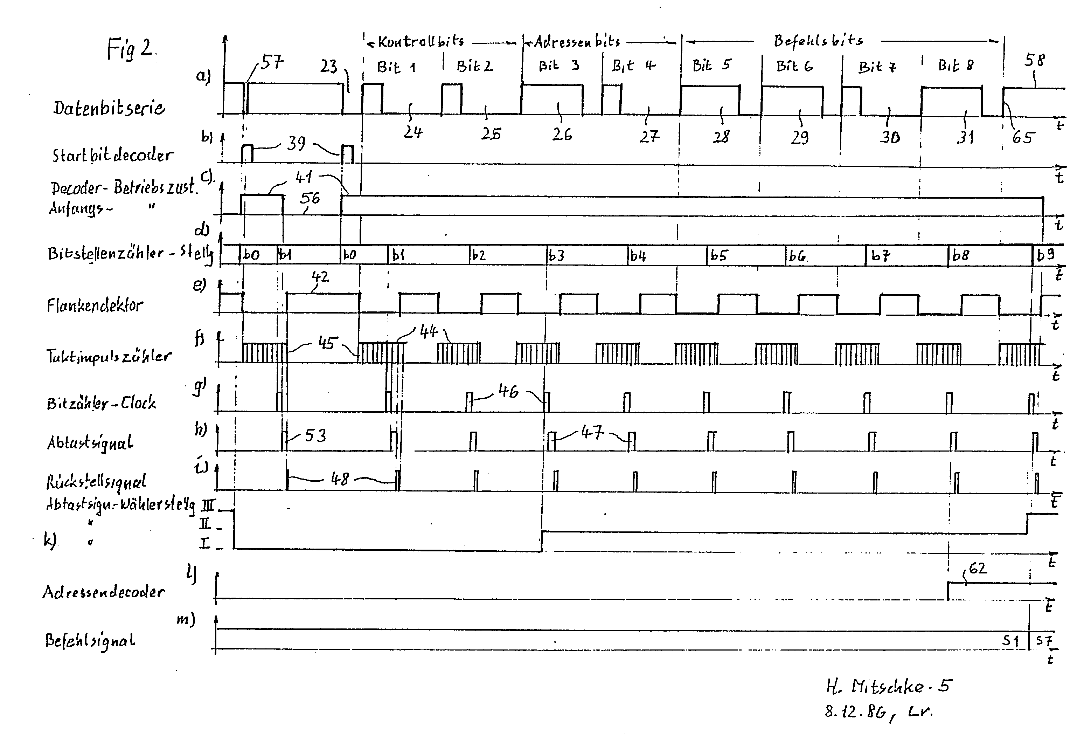

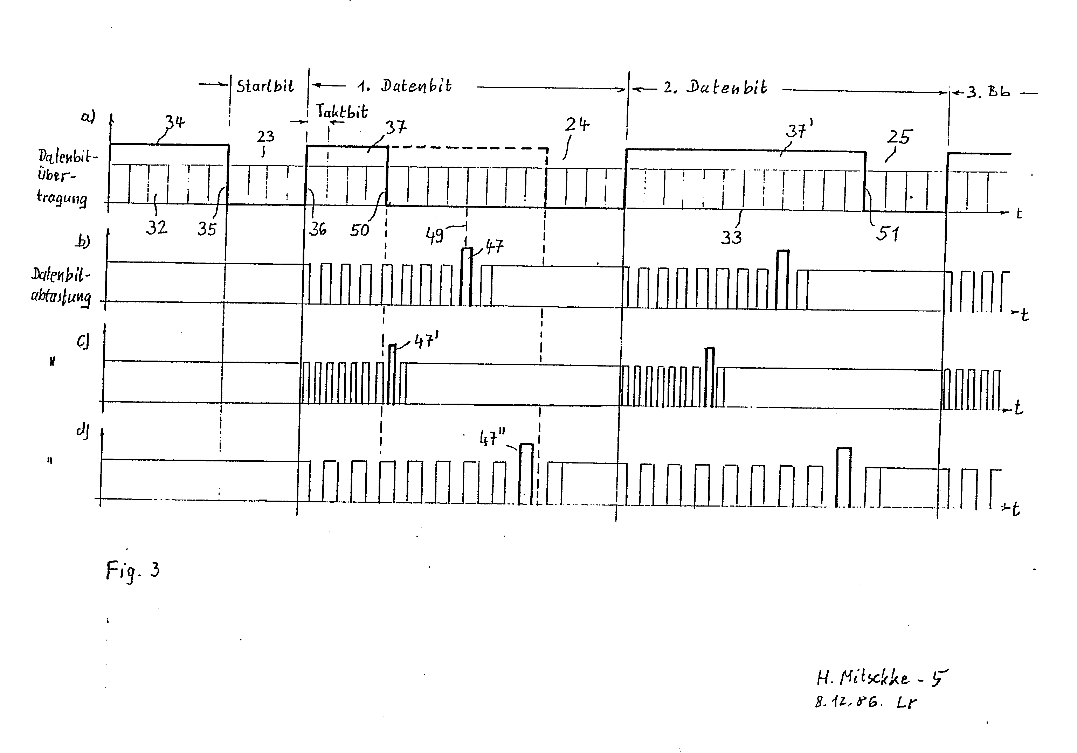

Die Datenbitquelle 1 des in Fig. 1 dargestellten Datenbussystems erzeugt an ihrem Datenausgang 2 zur Übertragung eines Befehls eine Datenbitserie, die aus einem Startbit 23 und acht Datenbits 24 bis 31 gebildet ist und die schematisch für beispielsweise einen Befehl S7 im Zeitdiagramm a) der Fig. 2 dargestellt ist. In der Datenbitquelle werden das Startbit und die acht Datenbits aus Taktbits 32 gebildet. Im Diagramm a) der Fig. 3 ist eine derartige Taktbitserie durch einen gerasterten Streifen 33 schematisch dargestellt. Im Ruhezustand besteht auf der Busleitung 3 ein Ruhespannungspegel 34. Das Startbit 23 beginnt mit einer fallenden Impulsflanke 35 und umfaßt vier Taktbits 32. Jedes Datenbit beginnt mit einer steigenden Impulsflanke 36 und umfaßt im dargestellten Ausführungsbeispiel 16 Taktbits. Ist der mit der steigenden Impulsflanke 36 beginnende Impuls 37 des Datenbits vier Taktbits lang, dann hat dadurch das Datenbit den logischen Dualwert "Null" (L0), wie beispielsweise das erste Datenbit im Zeitdiagramm a) der Fig. 3. Hat dagegen dieser Impuls 37' die Länge von 12 Taktbits 32, wie beispielsweise bei dem im Diagramm a) der Fig. 3 dargestellten zweiten Datenbit 25, dann hat dieses Datenbit den logischen Dualwert "Eins" (L1).

Die Wirkungsweise des Befehlsdecoders 4 wird anhand der Diagramme der Fig. 2 erläutert. Der rücksetzbare Flankendetektor 6 erzeugt an seinem Signalausgang 38 beim Empfang einer fallenden Flanke 35 des Signales 34 auf der Busleitung 3 einen Rückstellimpuls 39, der im Zeitdiagramm b) der Fig. 2 dargestellt ist und der den Bitzähler 15 an seinem Rückstelleingang 40 in die Anfangszählereinstellung b0 einstellt, wie dies im Diagramm d) der Fig. 2 schematisch dargestellt ist. Bis zu einer Rückstellung bleibt der Flankendetektor 6 für den Empfang weiterer Impulsflanken wirkungslos. Der Befehlsdecoder 4 ist dadurch in den Decodierbetriebszustand 41 geschaltet, der im Diagramm c) der Fig. 2 schematisch durch die Linie 41 dargestellt ist. Der ebenfalls rückstellbare Flankendetektor 12 der Abtastsignalerzeugeranordnung 9 erzeugt im Ruhezustand ein Rückstell- und Sperrsignal 42, das im Zeitdiagramm e) der Fig. 2 schematisch dargestellt ist und den Taktimpulszähler 10 der Abtastsignalanordnung 9 in der Anfangszählerstellung festhält. Beim Empfang der ersten ansteigenden Impulsflanke 36 gibt der Flankendetektor 12 bis zum Empfang eines Rückstellsignales am Rückstelleingang 43 des Flankendetektors 12 frei, so daß die Taktimpulse der Taktimpulsquelle 11 den Taktimpulszähler 10 fortschalten können. Die dabei durchlaufenen Zählerstellungen z1 bis z9 sind im Zeitdiagramm f) durch die Rasterblöcke 44 schematisch dargestellt. Darin entspricht jedes Raster 45 einer Zählerstellung des Taktimpulszählers 10. Im dargestellten Ausführungsbeispiel erzeugt der Taktzähler in der Zählerstellung z7 einen Taktimpuls 46 (Diagramm g) der Fig. 2) für die Fortschaltung des Bitzählers 15, in der Zählerstellung z8 einen Abtastimpuls 47 (Zeitdiagramm h) der Fig. 2) als Abtastsignal zur Abtastung des Bitwertes der auf der Busleitung 3 übertragenen Datenbits und in der Zählerstellung z9 einen Rückstellimpuls 48 (Zeitdiagramm i) der Fig. 2) als Rückstellsignal für die beiden Flankendetektoren 6 und 12.

Die Zählerstellung des Taktimpulszählers 10 für den Abtastimpuls 47 ist so bemessen, daß bei einer Impulsfrequenz der Taktimpulse der Taktimpulsquelle 11, die gleich der Impulsfrequenz der Taktbits der Datenbitquelle 1 ist, der Abtastimpuls 47 im Bereich des Überganges 49 vom achten zum neuten Taktbit eines Datenbits liegt und damit zeitlich in der Mitte liegt zwischen der Rückflanke 50 des Impulses 37 für den einen Datenbitwert (L0) und der Rückflanke 51 des Impulses 37' für den anderen Datenbitwert des Datenbits liegt, wie im Diagramm b) der Fig. 3 dargestellt ist. Ist die Impulsfrequenz der Taktimpulsquelle 11 größer als die Impulsfrequenz der Taktbitserie 33 der Datenbits, wie dies im Zeitdiagramm c) der Fig. 3 dargestellt ist, verschiebt sich der Zeitpunkt für das Auftreten des Abtastimpulses 47' zur Rückflanke 50 des kurzen Impulses 37 des Datenbits hin. Im anderen Fall, wenn die Impulsfrequenz der Taktimpulsquelle 11 kleiner ist als die Impulsfrequenz der Taktbitserie 33 der Datenbits, verschiebt sich der Zeitpunkt des Abtastimpulses 47" zur Rückflanke 51 des langen Impulses 37' des Datenbits hin, wie Diagramm d) der Fig. 3 zeigt. Wie ein Vergleich der Diagramme b), c) und d) der Fig. 3 zeigt, darf die Abweichung der Impulsfrequenz der Taktimpulsquelle 11 gegenüber der Impulsfrequenz der Taktbitserie 33 sehr beträchtlich sein und in einem Frequenzbereich von nahezu dem halben bis nahezu dem doppelten Frequenzwert der Impulsfrequenz der Taktbitserie liegen.

Im dargestellten Ausführungsbeispiel steuert der Bitzähler 15 den Abtastsignalwähler 14 so, daß die Abtastimpulse über den Schalter 16 zum Ausgang I des Abtastsignalwählers 14 gelangen, an den der Signaleingang 52 der von der Busleitung 3 gesteuerten Torschaltung 7 angeschlossen ist. Führt die Busleitung 3 zum Zeitpunkt des Auftretens des Abtastsignales 47 den Ruhespannungspegel 34, ist die Torschaltung durchlässig gesteuert, so daß dieses Abtastsignal als Rückstellsignal 53 über eine Entkopplungsschaltung 54 an den Rückstelleingang 55 des Flankendetektors 6 gelangt und diesen wieder in die Anfangsstellung zurückstellt. Der Befehlsdecoder 4 wird dadurch wieder in seinen Anfangsbetriebszustand 56 (Diagramm c) in Fig. 2) zurückgestellt. Dies erfolgt beispielsweise bei dem dargestellten Ausführungsbeispiel, wenn die abgetasteten Flanken nicht einem Startbit 23 sondern beispielsweise einem Störimpuls 57 zugehören, wie dies im Diagramm a) der Fig. 2 im Zug der dort dargestellten Datenbitserie 58 dargestellt ist.

Gehört die erste ansteigende Flanke 36 jedoch einem Kontrollbit 24 oder 25 an, ist die Torschaltung 7 zum Abtastzeitpunkt gesperrt, da das Kontrollbit zum Abtastzeitpunkt einen niederwertigen Pegel aufweist. Die Torschaltung 7 wirkt somit als Kontrollbitdecoder. Der vom Taktimpulszähler 10 in der Zählerstellung z9 erzeugte Rückstellimpuls gelangt über eine Entkopplungsschaltung 59 an den Rückstelleingang 43 des Flankendetektors 12 und stellt ihn zurück, so daß der Impulstaktzähler 10 bis zum Empfang der nächsten ansteigenden Impulsflanke in seiner Anfangszählerstellung festgehalten wird.

In den Zählerstellungen b3 bis b8 des Bitzählers 15 sind die elektronischen Schalter 16 und 17 so eingestellt, daß der Abtastimpuls der Zählerstellung z8 des Impulstaktzählers 10 über den Ausgang II des Abtastsignalwählers 14 an den Einschreibeeingang der Datenbitspeicheranordnung 18 gelangt. Diese Speicheranordnung ist in dem dargestellten Ausführungsbeispiel als Schieberegister ausgebildet, das bei jedem Abtastsignal 47 an seinem Einschreibeeingang 60 das an seinem Dateneingang 61 anliegende Datenbit einspeichert und die zuvor eingespeicherten Datenbits um einen Speicherplatz weiterschiebt. .

In der vorletzten Zählerstellung b8 des Bitzählers 15 gelangt der letzte Abtastimpuls 47 an den Einschreibeeingang der Datenbitspeicheranordnung 18, wodurch an den Dateneingang des Adressendecoders 19 die Adressenbits der übertragenen und empfangenen Datenbitserie. 58 gelangen. Bei einer Koinzidenz mit der in dem Adressendecoder 19 enthaltenen Adresse erzeugt der Adressendecoder ein Steuersignal 62, das im Diagramm l) der Fig. 2 schematisch dargestellt ist und das eine Torschaltung 63 vor dem Einschreibeeingang 64 des Befehlsspeichers 20 durchlässig steuert.

Die Datenbitserie 58 wird·von einer aufsteigenden Flanke 65 abgeschlossen. Der von dieser Flanke 65 ausgelöste Zählerdurchlauf des Impulstaktzählers 10 schaltet den Bitzähler 15 in die letzte Zählerstellung b9, in der der Bitzähler 15 die elektronischen Schalter 16 und 17 derart einstellt, daß das danach von dem Impulstaktzähler 10 erzeugte Abtastsignal 47 über den Ausgang III des Abtastsignalwählers 14 und die Torschatung 63 an den Einschreibeeingang 64 des Befehlsspeichers 20 gelangt. Der Befehlsspeicher 20 übernimmt damit die an den Datenausgängen 21 der Datenbitspeicheranordnung 18 liegenden Datenbits zur Umsetzung dieser Datenbits in den zugehörigen Befehl und erzeugt ein dem Befehl entsprechendes Steuersignal, beispielsweise ein Steuersignal S7, wie es im Zeitdiagramm m) der Fig. 2 schematisch angezeigt ist. Im dargestellten Ausführungsbeispiel bleibt dieses Steuersignal erhalten, bis in den Befehlsspeicher 20 ein neuer Befehl eingespeichert wird.

In der letzten Zählerstellung b9 des Bitzählers 15 wird außerdem die Torschaltung 8 durchlässig gesteuert, so daß der in der Zählerstellung z9 des Taktimpulszählers 10 erzeugte Rückstellimpuls 48 an die Rückstelleingänge beider Flankendetektoren 6 und 12 gelangt und damit der Befehlsdecoder 4 wieder in den Anfangsbetriebszustand 56 geschaltet wird. In einem anderen Ausführungsbeispiel kann anstelle der Torschaltung 8 der Signalausgang einer Impulsverzögerungsanordnung über die Entkopplungsschaltung 54 an den Rückstelleingang 55 des Flankendetektors 6 des Startbitdecoders 5 angeschlossen werden. Die Impulsverzögerungsanordnung wird in diesem Fall vom Rückstellimpuls 39 vom Ausgang 38 des Flankendecoders 6 gesteuert und verzögert diesen Impuls um eine Zeitdauer tv, die länger ist als die Zeitdauer einer Datenbitserie 58.

Beim Einschalten des Gerätes, in dem das Datenbussystem angeordnet ist und das hier nicht näher dargestellt ist, werden die Flankendetektoren 6 und 12 von einem Einschaltimpulsgeber 66 in die Anfangsstellung rückgesetzt und im Befehlsspeicher 20 an dessen Setzeingang 67 ein bestimmter Befehl gesetzt, der ein bestimmtes Steuersignal, z.B. S1 (Diagramm n) in Fig. 2) erzeugt.

## Ansprüche

1. Datenhubsystem für einen seriellen Datenbus
-mit wenigstens einer Datenbitquelle, die zur Übertragung eines Befehls eine Serie einer bestimmten Anzahl von Datenbits erzeugt,
-und mit wenigstens einem Befehlsdecoder zur Umsetzung des übertragenen Befehls in entsprechende Steuersignale, **dadurch gekennzeichnet,**
-daß der Datenbus eine einzige Busleitung (3) mit einem bestimmten Ruhepegel (34) enthält, - daß jedem Datenbit (24) eine bestimmte, gleichbleibende Anzahl von Taktbits (32) der Datenbitquelle (1) zugeordnet sind und jedes Datenbit mit der Vorderflanke (36) eines Impulses (37) beginnt, dessen Rückflanke (50) bei einem Datenbit (24), das einen ersten dualen Wert (L0) überträgt, eine erste Anzahl (vier) Taktbits von der Vorderflanke des Impulses entfernt ist und bei einem Datenbit (25), das einen zweiten dualen Wert (L1) überträgt, eine zweite, größere Anzahl (zwölf) Taktbits von der Vorderflanke (36) des Impulses (37) entfernt ist,

-daß jeder Datenbitserie (58) eines Befehles ein Startbit (23) vorangesetzt ist, dessen Ende die Vorderflanke (36) des Impulses (37) des ersten Datenbits (24) der Datenbitserie ist,

-und daß der Befehlsdecoder (4) aus einer Impulsserie eines Zähltaktes, deren Impulsfrequenz etwa gleich der Frequenz der den Datenbits zugrunde liegenden Taktbits (32) ist, ein Abtastsignal (47) bei einem Taktimpuls erzeugt, der für ein abzutastendes Datenbit zeitlich in der Mitte (49) zwischen dem Zeitpunkt (t1) der Rückflanke (50) des Impulses für den einen dualen Wert (L0) des Datenbits (24) und dem Zeitpunkt (t2) der Rückflanke (51) des Impulses für den anderen dualen Wert (L1) des Datenbits (25) liegt.

2. Datenbussystem nach Anspruch 1, dadurch gekennzeichnet, daß der Befehlsdecoder (4) beim Empfang eines Startbits (23) ein Stellsignal (39) erzeugt, das den Befehlsdecoder für eine bestimmte Zeit in einen Decodier-Betriebszustand (41) setzt.

3. Datenbussystem nach Anspruch 1 oder 2, dadurch gekennzeichnet,

-daß eine bestimmte Anzahl auf das Startbit (23) einer Datenbitserie (58) folgende Datenbits (24, 25) Kontrollbits mit einem bestimmten, stets gleichbleibenden Bitwert (L0) sind

-und daß der Befehlsdecoder (4) beim Abtasten eines Kontrollbits, das einen vom Kontrollbitwert (L0) abweichenden Bitwert aufweist, ein Rückstellsignal (53) erzeugt, das den Befehlsdecoder in einen Anfangsbetriebszustand (56) setzt.

4. Datenbussystem nach einem der vorhergehenden Ansprüche, dadurch gekennzeichnet,

-daß bestimmte Datenbits (26, 27) der Datenbitserie (58) Adressenbits sind und daß der Befehlsdecoder (4) einen Adressendecoder (19) enthält, der beim Empfang dem Befehlsdecoder zugeordneter Adressenbits ein Decodiersignal (62) erzeugt, das die Decodierung der Datenbits (28-31) oder die Ausgabe der den decodierten Befehl kennzeichnenden Steuersignale (S1, S7) freigibt.

5. Befehlsdecoder eines Datenbussystems nach einem der vorhergehenden Ansprüche, gekennzeichnet

-durch einen Startbitdecoder (5), der beim Empfang eines Startbits (23) einer Datenbitserie (58) ein Stellsignal (39) für einen Abtastsignalwähler (14) erzeugt,

-durch eine Abtastimpulserzeugeranordnung (9) mit einem Taktimpulszähler (10), der von einer Taktimpulsquelle (11) getaktet wird und der mit einem Ausgangssignal einer bestimmten Zählerstelle (z7) des Taktimpulszählers den Abtastsignalwähler (14) schrittweise fortschaltet, und mit einem Flankendetektor (12), der nach dem Empfang einer den Beginn eines Datenbits (24) kennzeichnenden Impulsflanke (36) ein Ausgangssignal zur Rückstellung und Sperrung des Taktimpulszählers aufhebt

-und dadurch, daß der Abtastsignalwähler (14) die von der Abtastimpulserzeugeranordnung (9) erzeugten Abtastimpulse (47) in den Wählerstellungen (I) für die Kontrollbits (24, 25) einem Kontrollbitdecoder (7) zuführt, der zum Abtastzeitpunkt (49) ein Rückstellsignal (53) für den Startbitdecoder (5) erzeugt, wenn kein Kontrollbit erkannt wird, in den Wählerstellungen (II) für die Datenbits (26-31) einer Datenbitspeicheranordnung (18) zur Übernahme des anliegenden Datenbits zuführt und in der letzten Wählerstellung (III) dem Einschreibeingang (64) eines Befehlsspeichers (20) zur Übernahme der gespeicherten Datenbits (28-31) und zur Ausgabe des dem zugehörigen Befehl entsprechenden Steuersignals (S7) zuführt.

6. Befehlsdecoder nach Anspruch 5, gekennzeichnet durch eine dem Einschreibeeingang (64) des Befehlsspeichers (20) vorgeschaltete Torschaltung (63), die von einem Adressendecoder (19) gesteuert wird.

7. Befehlsdecoder nach Anspruch 5 oder 6, gekennzeichnet durch eine Impulsverzögerungsschaltung, die zwischen den Ausgang (38) des Flankendetektors (6) des Startbitdecoders (5) und dessen Rückstelleingang (54, 55) angeordnet ist und deren Verzögerngszeit (t$_v$) größer ist als die Zeitdauer einer Datenbitserie (58).

Fig 1.

H. Mitschke -5
8.12.86 Lr.

Fig 2.

a) Datenbitserie

Kontrollbits — Adressenbits — Befehlsbits

57  23  Bit 1  Bit 2  Bit 3  Bit 4  Bit 5  Bit 6  Bit 7  Bit 8  58

24  25  26  27  28  29  30  31  65

b) Startbitdecoder — 39

c) Decoder-Betriebszust. — 41, 56
Anfangs- "

d) Bitstellenzähler - Stelly
b0  b1  b0  b1  b2  b3  b4  b5  b6  b7  b8  b9

e) Flankendektor — 42

f) Taktimpulszähler — 45, 44

g) Bitzähler-Clock — 46

h) Abtastsignal — 53, 47

i) Rückstellsignal — 48

Abtastsign.-Wählerstellg  III
k)  "  II
  "  I

l) Adressendecoder — 62

m) Befehlsignal
S1  S7

H. Mitschke-5
8.12.86, Lv.

0 273 234

Fig. 3

0 273 234

H. Mitschke - 5
8. 12. 86. Lr